(19) Europäisches Patentamt
European Patent Office
Office européen des brevets

(11) EP 2 883 920 A1

# (12) EUROPÄISCHE PATENTANMELDUNG

(43) Veröffentlichungstag:
**17.06.2015 Patentblatt 2015/25**

(51) Int Cl.:
***C09D 5/18*** *(2006.01)*

(21) Anmeldenummer: **13197465.1**

(22) Anmeldetag: **16.12.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **HILTI Aktiengesellschaft**
**9494 Schaan (LI)**

(72) Erfinder:
- **Simon, Sebastian**
  **86807 Buchloe Lindenberg (DE)**
- **Thiemann, Frank**
  **86899 Landsberg/Lech (DE)**

(74) Vertreter: **Hilti Aktiengesellschaft**
**Corporate Intellectual Property**
**Feldkircherstrasse 100**
**Postfach 333**
**9494 Schaan (LI)**

## (54) Dämmschichtbildende Zusammensetzung und deren Verwendung

(57) Es wird eine dämmschichtbildende Zusammensetzung beschrieben, die ein Bindemittel auf Basis einer Verbindung mit elektronenarmen Kohlenstoffmehrfachbindungen und einer Carbanionen-bildenden Verbindung enthält. Durch die erfindungsgemäße Zusammensetzung, deren Expansionsrate relativ hoch ist, können in einfacher und schneller Weise Beschichtungen mit der für die jeweilige Feuerwiderstandsdauer erforderlichen Schichtdicke aufgetragen werden, wobei die Schichtdicke auf ein Minimum reduziert und dennoch eine große isolierende Wirkung erreicht werden kann. Die erfindungsgemäße Zusammensetzung eignet sich besonders für den Brandschutz, insbesondere als Beschichtung von Stahlbauteilen, wie Stützen, Trägern, Fachwerkstäben, zur Erhöhung der Feuerwiderstandsdauer.

EP 2 883 920 A1

Printed by Jouve, 75001 PARIS (FR)

## Beschreibung

Die vorliegende Erfindung betrifft eine dämmschichtbildende Zusammensetzung, insbesondere eine Zusammensetzung mit intumeszierenden Eigenschaften, die ein Bindemittel auf Basis einer Verbindung mit elektronenarmen Kohlenstoffmehrfachbindungen und einer Carbanionen-bildenden Verbindung enthält, sowie deren Verwendung für den Brandschutz, insbesondere für Beschichtungen von Bauteilen, wie Stützen, Trägern, oder Fachwerkstäben, zur Erhöhung der Feuerwiderstandsdauer.

Dämmschichtbildende Zusammensetzungen, auch intumeszierende Zusammensetzungen genannt, werden üblicherweise zur Bildung von Beschichtungen auf die Oberfläche von Bauteilen aufgebracht, um diese vor Feuer oder gegen große Hitzeeinwirkung etwa in Folge eines Brandes zu schützen. Stahlkonstruktionen sind mittlerweile fester Bestandteil der modernen Architektur, auch wenn sie einen entscheidenden Nachteil im Vergleich zum Stahlbetonbau haben. Oberhalb von ca. 500°C sinkt die Lasttragekapazität des Stahls um 50%, d.h. der Stahl verliert einen großen Teil seiner Stabilität und seiner Tragfähigkeit. Diese Temperatur kann je nach Brandbelastung, etwa bei direkter Feuereinwirkung (ca. 1000°C) bereits nach ca. 5-10 Minuten erreicht werden, was häufig zu einem Tragfähigkeitsverlust der Konstruktion führt. Zielsetzung des Brandschutzes, insbesondere des Stahlbrandschutzes ist es nun, die Zeitspanne bis zum Tragfähigkeitsverlust einer Stahlkonstruktion im Brandfall zur Rettung von Menschenleben und wertvollen Gütern möglichst lange hinauszuzögern.

In den Bauordnungen vieler Länder werden hierzu entsprechende Feuerwiderstandszeiten für bestimmte Bauwerke aus Stahl gefordert. Sie werden durch sogenannte F-Klassen wie F 30, F 60, F 90 (Feuerwiderstandsklassen nach DIN 4102-2) oder amerikanische Klassen nach ASTM usw. definiert. Dabei bedeutet nach DIN 4102-2 zum Beispiel F 30, dass eine tragende Stahlkonstruktion im Brandfall unter Normbedingungen mindestens 30 Minuten dem Feuer standhalten muss. Dies wird üblicherweise dadurch erreicht, dass die Aufheizgeschwindigkeit des Stahls verzögert wird, z.B. durch Überziehen der Stahlkonstruktion mit dämmschichtbildenden Beschichtungen. Hierbei handelt es sich um Anstriche, deren Bestandteile im Brandfall unter Ausbildung eines festen mikroporösen Kohleschaums aufschäumen. Dabei bildet sich eine feinporige und dicke Schaumschicht, die sogenannte Aschekruste, die je nach Zusammensetzung stark wärmeisolierend ist und so das Aufheizen des Bauteils verzögert, sodass die kritische Temperatur von ca. 500°C, frühestens nach 30, 60, 90, 120 Minuten oder bis zu 240 Minuten erreicht wird. Wesentlich für den erreichbaren Feuerwiderstand ist immer die aufgebrachte Schichtdicke der Beschichtung, bzw. der sich daraus entwickelnden Aschekruste. Geschlossene Profile, wie Rohre, benötigen bei vergleichbarer Massivität etwa die doppelte Menge verglichen mit offenen Profilen, wie Träger mit Doppel-T-Profil. Damit die geforderten Feuerwiderstandszeiten eingehalten werden, müssen die Beschichtungen eine bestimmte Dicke aufweisen und die Fähigkeit haben, bei Hitzeeinwirkung eine möglichst voluminöse und damit gut isolierende Aschekruste zu bilden, welche über den Zeitraum der Brandbeanspruchung mechanisch stabil bleibt.

Hierzu existieren im Stand der Technik verschiedene Systeme. Im Wesentlichen wird zwischen 100%-Systemen und lösemittel- bzw. wasserbasierten Systemen unterschieden. Bei den lösemittel- bzw. wasserbasierten Systemen werden Bindemittel, meist Harze, als Lösung, Dispersion oder Emulsion auf das Bauteil aufgetragen. Diese können als Ein- oder Mehrkomponenten-Systeme ausgeführt werden. Nach dem Auftragen verdunstet das Lösungsmittel bzw. das Wasser und hinterlässt einen Film, der mit der Zeit trocknet. Hierbei kann ferner zwischen solchen Systemen unterschieden werden, bei denen sich während der Trocknung die Beschichtung im Wesentlichen nicht mehr ändert, und solchen Systemen, bei denen nach dem Verdunsten das Bindemittel primär durch Oxidations- und Polymerisationsreaktionen härtet, was beispielsweise durch den Luftsauerstoff induziert wird. Die 100%-Systeme enthalten die Bestandteile des Bindemittels ohne Lösungsmittel bzw. Wasser. Sie werden auf das Bauteil aufgetragen, wobei die "Trocknung" der Beschichtung durch Reaktion der Bindemittelbestandteile untereinander erfolgt und/oder durch Reaktion mit Bestandteilen der Umgebungsluft wie beispielsweise Wasser.

Die Systeme auf Lösemittel- oder Wasserbasis haben den Nachteil, dass die Trockenzeiten, auch Aushärtezeiten genannt, lang sind und zudem mehrere Schichten aufgetragen werden müssen, also mehrerer Arbeitsgänge bedürfen, um die erforderliche Schichtdicke zu erreichen. Da jede einzelne Schicht vor dem Auftragen der nächsten Schicht entsprechend getrocknet sein muss, führt dies zu einem hohen Aufwand an Arbeitszeit und dementsprechend hohen Kosten und zu einer Verzögerung bei der Fertigstellung des Bauwerks, da je nach klimatischen Bedingungen zum Teil mehrere Tage vergehen, bis die erforderliche Schichtdicke aufgetragen ist. Nachteilig ist auch, dass durch die erforderliche Schichtdicke die Beschichtung während des Trocknens oder bei Hitzeeinwirkung zur Rissbildung und zum Abblättern neigen kann, wodurch im schlimmsten Fall der Untergrund teilweise freigelegt wird, insbesondere bei Systemen, bei denen das Bindemittel nicht nach Verdunsten des Lösungsmittels bzw. des Wassers nachhärtet.

Um diesen Nachteil zu umgehen, wurden Zwei- oder Mehrkomponentensysteme auf Epoxid-Amin-Basis entwickelt, die nahezu ohne Lösemittel auskommen, so dass eine Aushärtung wesentlich schneller erfolgt und zudem dickere Schichten in einem Arbeitsgang aufgetragen werden können, so dass die erforderliche Schichtdicke wesentlich schneller aufgebaut ist. Diese haben jedoch den Nachteil, dass das Bindemittel eine sehr stabile und starre Polymermatrix mit oftmals hohem Erweichungsbereich bildet, was die Schaumbildung durch die Schaumbildner behindert. Daher müssen dicke Schichten aufgetragen werden, um eine ausreichende Schaumdicke für die Isolierung zu erzeugen. Dies ist wiederum nachteilig, da viel Material erforderlich ist. Damit diese Systeme aufgetragen werden können, sind häufig Verarbeitungstemperaturen von bis zu +70°C erforderlich, was die Anwendung dieser Systeme arbeitsaufwendig und teuer in der Installation macht. Ferner sind einige der verwendeten Bindemittelkomponenten toxisch oder in sonstiger Weise kritisch (z.B. reizend, ätzend), wie beispielsweise die bei den Epoxid-Amin-Systemen eingesetzten Amine oder Aminmischungen.

Im Bereich der dekorativen und schützenden Beschichtungen ist die Michael-Addition als Härtungsmechanismus bekannt. Die Reaktion wird dabei üblicherweise mit starken Basen wie beispielsweise einer Amidinbase katalysiert. Bei Formulierungen auf Basis von Polymeren, die hydrolytisch spaltbare Bindungen haben, wie Polyester, ergibt sich dadurch jedoch der Nachteil, dass die Beschichtungen eine verringerte Stabilität gegen Hydrolyse aufweisen. Die WO 2010/030771 A1 beispielsweise beschreibt ein Verfahren zum Auftragen einer härtbaren Zusammensetzung auf ein Substrat, wobei die Härtung durch eine Michael-Addition einer Verbindung, die aktive Wasserstoffatome enthält, an Polyene in Gegenwart eines Phosphin-Katalysators erfolgt. Auch im Bereich der Klebstoffe ist die Michael-Addition als Härtungsmechanismus bekannt, wie beispielsweise in der EP 1462501 A1 beschrieben.

Eine Brandschutzbeschichtung auf dieser Basis, die Brandschutzadditive enthält, ist allerdings nicht bekannt. Ferner ist nicht bekannt, bis zu welchem Anteil die Brandschutzadditive enthalten sein können.

Der Erfindung liegt daher die Aufgabe zugrunde, ein dämmschichtbildendes Beschichtungssystem der eingangs erwähnten Art zu schaffen, das die genannten Nachteile vermeidet, das insbesondere nicht lösemittel- oder wasserbasiert ist und eine schnelle Aushärtung aufweist, aufgrund entsprechend abgestimmter Viskosität einfach aufzutragen ist und aufgrund der erreichbaren hohen Intumeszenz, d.h. der Bildung einer effektiven Aschekrustenschicht, nur eine geringe Schichtdicke erfordert.

Nachteilig an den bekannten Systemen ist außerdem, dass die Reaktivität der Bindemittelkomponenten die Verarbeitungszeit der Zusammensetzungen bestimmt. Ferner werden weitere Anforderungen an Beschichtungssysteme gestellt, wie die zeitliche Beeinflussung der Aushärtung (Aushärtungsprofil), ohne jedoch die Aushärtung an sich, d.h. die Reaktivität der Bindemittelkomponenten negativ zu beeinflussen, oder die Beeinflussung der Beschaffenheit der Oberfläche der ausgehärteten Beschichtung, die mit den bekannten Zusammensetzung nicht erreicht werden können. Diese Anforderungen stehen sich jedoch in gewisser Weise entgegen. Für eine schnelle Aushärtung, aber auch um die Robustheit gegenüber sauren Verunreinigungen zu erreichen, sind reaktive Bindemittelkomponenten und/oder hohe Konzentrationen an Katalysatoren erforderlich. Wohingegen hohe Konzentrationen an Katalysatoren die Oberflächenbeschaffenheit und die Härte der Beschichtung negativ beeinflussen können. Aus der WO 2013/050623 A1 ist ein Michael-Additions-System bekannt, das eben einem Michael-Donor und einem Michal-Akzeptor einen weiteren Michael-Donor, dessen Reaktivität sich von der des eigentlichen Michael-Donors unterscheidet, als Inhibitor zur Einstellung des Reaktivitätsprofils des Michael-Additions-Systems enthält.

Dieses System hat allerdings keine Brandschutzeigenschaften, so dass es nicht als Brandschutzbeschichtung verwendet werden kann.

Eine weitere Aufgabe der Erfindung ist daher, ein dämmschichtbildendes Beschichtungssystem der eingangs erwähnten Art zu schaffen, dessen Reaktivität einstellbar ist, so dass eine Offenzeit einstellbar wird und das Beschichtungssystem an verschiedene Verarbeitungsbedingungen angepasst werden kann.

Diese Aufgabe wird durch die Zusammensetzung nach Anspruch 1 gelöst. Bevorzugte Ausführungsformen sind den Unteransprüchen zu entnehmen.

Gegenstand der Erfindung ist demnach eine dämmschichtbildende Zusammensetzung, umfassend
einen Bestandteil A, der einen multifunktionellen Michael-Akzeptor enthält, der mindestens zwei elektronenarme Kohlenstoffmehrfachbindungen pro Molekül als funktionelle Michael-Akzeptor-Gruppen aufweist;
einen Bestandteil B, der einen multifunktionellen Michael-Donor enthält, der mindestens zwei C,H-saure Gruppen pro Molekül als funktionelle Michael-Donor-Gruppen aufweist;
einen Bestandteil C, der eine Verbindung enthält, die eine X-H-Gruppe aufweist, wobei diese Verbindung mit dem Bestandteil A reagieren kann und wobei X für N, P, O, S oder C steht, mit der Maßgabe, dass wenn X für C steht, C Teil einer sauren Methylgruppe ist;
einen Bestandteil D, der einen Katalysator für die Michael-Additionsreaktion enthält; und
einen Bestandteil E, der ein dämmschichtbildendes Additiv enthält.

Durch die erfindungsgemäße Zusammensetzung können in einfacher und schneller Weise Beschichtungen mit der für die jeweilige Feuerwiderstandsdauer erforderlichen Schichtdicke aufgetragen werden, wobei die Verarbeitungszeit in einfacher Weise einstellbar ist. Die durch die Erfindung erreichten Vorteile sind im Wesentlichen darin zu sehen, dass im Vergleich zu den Systemen auf Lösemittel- oder Wasserbasis mit ihren inhärenten langsamen Aushärtezeiten die Arbeitszeit erheblich reduziert werden kann. Aufgrund der im Applikationsbereich geringen Viskosität der Zusammensetzung, eingestellt über geeignete Verdickersysteme, ist im Unterschied zu Epoxid-Amin-Systemen ein Auftragen ohne Erwärmen der Zusammensetzung zum Beispiel durch das weitverbreitete Airless-Sprühverfahren möglich.

Ein weiterer Vorteil liegt darin, dass auf gesundheitsgefährdende und kennzeichnungspflichtige Substanzen, wie beispielsweise kritische Aminverbindungen, weitgehend oder vollständig verzichtet werden kann.

Aufgrund des gegenüber den Systemen auf Epoxid-Amin-Basis niedrigeren Erweichungsbereiches der Polymermatrix ist die Intumeszenz hinsichtlich der Expansionsrate relativ hoch, so dass selbst mit dünnen Schichten eine große isolierende Wirkung erreicht wird. Hierzu trägt auch der mögliche hohe Füllgrad der Zusammensetzung mit Brandschutzadditiven bei, der selbst ohne die Verwendung von leicht flüchtigen Lösungsmitteln erreicht werden kann. Dementsprechend sinkt der Materialaufwand, was sich insbesondere beim großflächigen Auftragen günstig auf die Materialkosten auswirkt. Erreicht wird dies insbesondere durch die Nutzung eines reaktiven Systems, das nicht physikalisch trocknet, sondern chemisch über eine Additionsreaktion härtet. Damit erleiden die Zusammensetzungen keinen Volumenverlust durch das Abtrocknen von Lösemitteln oder bei wasserbasierten Systemen von Wasser. So ist bei einem klassischen System ein Lösemittelgehalt von etwa 25% typisch. Dies bedeutet, dass aus einer 10 mm-Nassfilmschicht nur 7,5 mm als eigentliche Schutzschicht auf dem zu schützenden Substrat verbleiben. Bei der erfindungsgemäßen Zusammensetzung verbleiben mehr als 95% der Beschichtung auf dem zu schützenden Substrat. Im Brandfall bildet die erfindungsgemäße Zusammensetzung eine sehr harte und stabile Aschekruste auch ohne die Zugabe eines hohen Anteils an Aschekrustenstabilisatoren. Die erfindungsgemäßen Zusammensetzungen zeigen eine ausgezeichnete Haftung an Stahl, Kohäsion und Schlagbeständigkeit, verglichen mit lösemittel- oder wasserbasierten Systemen, wenn diese ohne Grundierung aufgetragen werden.

Zum besseren Verständnis der Erfindung werden die folgenden Erläuterungen der hierin verwendeten Terminologie als sinnvoll erachtet. Im Sinne der Erfindung:

- ist eine *"Michael-Addition"* allgemein eine Reaktion zwischen einem Michael-Donor und einem Michael-Akzeptor, häufig in Gegenwart eines Katalysators, wie beispielsweise einer starken Base; die Michael-Addition ist in der Literatur hinreichend bekannt und häufig beschrieben;

- ist ein "*Michael-Akzeptor*" eine Verbindung mit mindestens einer C-C-Doppelbindung oder C-C-Dreifachbindung, die nicht aromatisch und die elektronenarm ist; der Michael-Akzeptor setzt sich aus der funktionellen Michael-Akzeptor-Gruppe und einem Gerüst zusammen;

- ist eine "*funktionelle Michael Akzeptor-Gruppe*" die Gruppe im Michael-Akzeptor, die eine funktionelle Gruppe, genauer eine elektronenziehende Gruppe, und in $\alpha$-Position hierzu die C-C-Doppelbindung oder C-C-Dreifachbindung, an die der Michael-Donor addiert, umfasst; die elektronenarme C-C-Doppelbindung oder C-C-Dreifachbindung wird auch als Michael-aktive Kohlenstoffmehrfachbindung bezeichnet; die funktionelle Michael-Akzeptor-Gruppe ist an das Gerüst gebunden bzw. in dieses eingebunden; ein Michael-Akzeptor kann eine oder mehrere separate funktionelle Michael-Akzeptor-Gruppen aufweisen; jede funktionelle Michael-Akzeptor-Gruppe kann eine Michael-aktive Kohlenstoffmehrfachbindung aufweisen; die Gesamtzahl an Michael-aktiven Kohlenstoffmehrfachbindungen an dem Molekül entspricht der Funktionalität des Michael-Akzeptors;

- ist ein "*multifunktioneller Michael-Akzeptor*" eine Verbindung, die zwei oder mehrere funktionelle Michael-Akzeptor-Gruppen bzw. Michael-aktive Kohlenstoffmehrfachbindungen aufweist;

- bedeutet *"elektronenarm"*, dass die Kohlenstoffmehrfachbindung in unmittelbarer Nähe, d.h. in der Regel an dem der Mehrfachbindung benachbarten Kohlenstoffatom, elektronenziehende Gruppen trägt, die Elektronendichte von der Mehrfachbindung abziehen, wie beispielsweise C=O;

- ist ein "*Michael-Donor*" eine C,H-saure Verbindung, d.h. eine Verbindung mit mindestens einer sauren C,H-Bindung, die mindestens ein Carbanion bilden kann, das in der Lage ist, an den Michael-Akzeptor zu addieren; das saure Wasserstoffatom wird auch als Michael-aktives Wasserstoffatom bezeichnet; der Michael-Donor setzt sich aus der funktionellen Michael-Donor-Gruppe und einem Gerüst zusammen;

- ist eine "*funktionelle Michael-Donor-Gruppe*" die Gruppe im Michael-Donor, die eine funktionelle Gruppe und in $\alpha$-Position hierzu das Kohlenstoffstoffatom umfasst, aus dem das Carbanion gebildet wird; die funktionelle Michael-Donor-Gruppe ist an das Gerüst gebunden; ein Michael-Donor kann eine oder mehrere separate funktionelle Michael-Donor-Gruppen aufweisen; jede funktionelle Michael-Donor-Gruppe kann ein Michael-aktives Wasserstoffatom aufweisen; die Gesamtzahl an Michael-aktiven Wasserstoffatomen an dem Molekül entspricht der Funktionalität des Michael-Donors;

- ist ein "*multifunktioneller Michael-Donor*" eine Verbindung, die zwei oder mehrere funktionelle Michael-Donor-Gruppen bzw. Michael-aktive Wasserstoffatome aufweist;

- ist das "*Gerüst*" der Teil des Donor- oder Akzeptormoleküls, an das die funktionelle Michael-Donor-Gruppe oder die funktionelle Michael-Akzeptor-Gruppe angebunden ist;

- bedeutet "*chemische Intumeszenz*" die Bildung einer voluminösen, isolierenden Ascheschicht durch aufeinander abgestimmte Verbindungen, die bei Hitzeeinwirkung miteinander reagieren;

- bedeutet "*physikalische Intumeszenz*" die Bildung einer voluminösen, isolierenden Schicht durch Aufblähen einer Verbindung, die, ohne dass eine chemische Reaktion zwischen zwei Verbindungen stattgefunden hat, bei Hitzeeinwirkung Gase freisetzt, wodurch das Volumen der Verbindung um ein Vielfaches des ursprünglichen Volumens zunimmt;

- bedeutet "*dämmschichtbildend*", dass im Brandfall ein fester mikroporöser Kohleschaum entsteht, so dass die gebildete feinporige und dicke Schaumschicht, die sogenannte Aschekruste, je nach Zusammensetzung ein Substrat gegen Hitze isoliert;

- ist ein "*Kohlenstofflieferant*" eine organische Verbindung, die durch unvollständige Verbrennung ein Kohlenstoffgerüst hinterlässt und nicht vollständig zu Kohlendioxid und Wasser verbrennt (Carbonifizierung); diese Verbindungen werden auch als "*Kohlenstoffgerüstbildner*" bezeichnet;

- ist ein "*Säurebildner*" eine Verbindung, die unter Hitzeeinwirkung, d.h. oberhalb etwa 150°C beispielsweise durch Zersetzung eine nicht flüchtige Säure bildet und dadurch als Katalysator für die Carbonifizierung wirkt; zudem kann sie zur Erniedrigung der Viskosität der Schmelze des Bindemittels beitragen; hiermit gleichbedeutend wird der Begriff "*Dehydrierungskatalysator*" verwendet;

- ist ein "*Treibmittel*" eine Verbindung, die sich bei erhöhter Temperatur unter Entwicklung inerter, d.h. nicht-brennbarer Gase zersetzt und das durch die Carbonifizierung gebildete Kohlenstoffgerüst und gegebenenfalls das erweichte Bindemittel zu einem Schaum aufbläht (Intumeszenz); dieser Begriff wird gleichbedeutend mit "*Gasbildner*" verwendet;

- ist ein "*Aschekrustenstabilisator*" eine sogenannte gerüstbildende Verbindung, die das Kohlenstoffgerüst (Aschekruste), das aus dem Zusammenwirken der Kohlenstoffbildung aus der Kohlenstoffquelle und dem Gas aus dem Treibmittel, oder der physikalischen Intumeszenz gebildet wird, stabilisiert. Die prinzipielle Wirkungsweise ist dabei die, dass die an sich sehr weichen entstehenden Kohlenstoffschichten durch anorganische Verbindungen mechanisch verfestigt werden; die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern;

- bedeutet "*(Meth)acryl.../...(meth)acryl...*" dass sowohl die "Methacryl.../...methacryl..."- als auch die "Acryl.../...acryl..."-Verbindungen umfasst sein sollen;

- ist ein "*Oligomer*" ein Molekül mit 2 bis 5 Wiederholungseinheiten und ist ein "*Polymer*" ein Molekül mit 6 oder mehr Wiederholungseinheiten und können Strukturen aufweisen, die linear, verzweigt, sternförmig, gewunden, hyperverzweigt oder vernetzt sind; im Allgemeinen können Polymere eine einzelne Art von Wiederholungseinheit aufweisen ("Homopolymere") oder sie können mehr als eine Art von Wiederholungseinheiten aufweisen ("Copolymere"). Wie hierin verwendet, ist "Harz" ein Synonym für Polymer.

Im Allgemeinen wird angenommen, dass das Umsetzen eines Michael-Donors mit einer Funktionalität von zwei mit einem Michael-Akzeptor mit einer Funktionalität von zwei zu linearen molekularen Strukturen führen wird. Oftmals müssen molekulare Strukturen erzeugt werden, die verzweigt und/oder vernetzt sind, wofür die Verwendung von mindestens einem Inhaltsstoff mit einer Funktionalität von größer zwei erforderlich ist. Daher haben der multifunktionelle Michael-Donor oder der multifunktionelle Michael-Akzeptor oder beide bevorzugt eine Funktionalität von größer zwei.

Zweckmäßig wird als Michael-Akzeptor eine Verbindung mit mindestens zwei elektronenarmen Kohlenstoffmehrfachbindungen, wie C-C-Doppelbindungen oder C-C-Dreifachbindungen, bevorzugt C-C-Doppelbindungen, pro Molekül als funktionelle Michael-Akzeptor-Gruppe verwendet.

Gemäß einer Ausführungsform der Erfindung ist der Michael-Akzeptor eine Verbindung mit mindestens einer funktionellen Michael-Akzeptor-Gruppe mit der Struktur (I) oder (II):

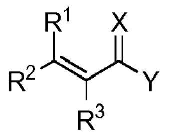
(I)

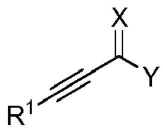
(II)

in denen $R^1$, $R^2$ und $R^3$ jeweils unabhängig voneinander Wasserstoff oder organische Reste darstellen, wie zum Beispiel eine lineare, verzweigte oder cyclische, gegebenenfalls substituierte Alkylgruppe, Arylgruppe, Aralkylgruppe (auch arylsubstituierte Alkylgruppe genannt) oder Alkarylgruppe (auch alkyl-substituierte Arylgruppe genannt), einschließlich Derivate und substituierte Versionen davon, wobei diese unabhängig voneinander zusätzliche Ethergruppen, Carboxylgruppen, Carbonylgruppen, Thiol-analoge Gruppen, Stickstoff-enthaltende Gruppen oder Kombinationen davon enthalten können; X Sauerstoff, Schwefel oder $NR^4$ darstellt, worin $R^4$ Wasserstoff oder jede der organischen Gruppen, wie sie oben für $R^1$, $R^2$ und $R^3$ beschrieben sind, darstellt; Y $OR^5$, $SR^5$ oder $NR^5R^6$ darstellt, worin $R^5$ Wasserstoff oder jede der organischen Gruppen, wie sie oben für $R^1$, $R^2$ und $R^3$ beschrieben sind, darstellt.

Bevorzugt ist die funktionelle Michael-Akzeptor-Gruppe eine Gruppe mit der Struktur (III):

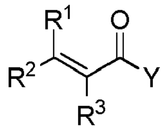
(III)

in der $R^1$, $R^2$ und $R^3$ wie oben beschrieben sind und Y $OR^5$ oder $NR^5R^6$ darstellt, wobei $R^5$ und $R^6$ wie oben beschrieben sind.

Jede funktionelle Michael-Akzeptor-Gruppe kann durch eines oder mehrere von $R^1$, $R^2$, $R^3$, $R^4$, $R^5$ oder $R^6$ an eine andere funktionelle Michael-Akzeptor-Gruppe oder ein Gerüst direkt angebunden sein.

Als Michael-Donor kann jede C,H-saure Verbindung verwendet werden, die über mindestens zwei funktionelle Michael-Donor-Gruppen verfügt und Carbanionen, insbesondere Enolat-Anionen, bilden kann, welche in einer Michael-Reaktion an elektronenarme Doppelbindungen addieren können. Dabei verfügt eine funktionelle Michael-Donor-Gruppe über mindestens eine saure CH-Bindung. Damit verfügt ein difunktioneller Michael-Donor, der zwei funktionelle Michael-Donor-Gruppen enthält, welche jeweils eine saure CH-Bindung aufweisen, über zwei saure CH-Bindungen pro Molekül. Ein trifunktioneller Michael-Donor kann drei funktionelle Michael-Donor-Gruppen mit jeweils nur einer sauren CH-Bindung enthalten oder er kann zwei funktionelle Michael-Donor-Gruppen enthalten, wovon eine Gruppe nur eine und die zweite Gruppe zwei saure CH-Bindungen enthält. Das Carbanion wird in der Regel erst nach Abspaltung des Michael-aktiven Wasserstoffatoms, durch eine geeignete, stöchiometrisch oder katalytisch wirksame Base, freigesetzt.

Zweckmäßig ist das Michael-aktive Wasserstoffatom an ein Kohlenstoffatom gebunden, das zwischen zwei elektronenziehenden Gruppen, wie C=O, sitzt.

Beispiele geeigneter funktioneller Michael-Donor-Gruppen umfassen β-Ketoester, 1,3-Diketone, Malonester und Malonesterderivate, wie Malonamide, und β-Ketoamide (worin das Michael-aktive Wasserstoffatom an ein Kohlenstoffatom angebunden sind, welches zwischen den Carbonylgruppen sitzt), Cyanoacetatester und Cyanoacetamide (worin das Michael-aktive Wasserstoffatom an ein Kohlestoffatom gebunden ist, welches zwischen einer Carbonylgruppe und einer Cyanogruppe sitzt) sowie α-Nitroalkane.

Jede funktionelle Michael-Donor-Gruppe kann analog der Michael-Akzeptor-Gruppe an eine andere funktionelle Michael-Donor-Gruppe oder ein Gerüst direkt angebunden sein.

Der multifunktionelle Michael-Akzeptor und/oder der multifunktionelle Michael-Donor der vorliegenden Erfindung können über irgendeines einer breiten Vielzahl von Gerüsten verfügen, wobei diese gleich oder unterschiedlich sein können.

In einigen Ausführungsformen der vorliegenden Erfindung ist das Gerüst des multifunktionellen Michael-Donors oder des multifunktionellen Michael-Akzeptors oder von beiden ein Monomer, ein Oligomer oder ein Polymer.

Bevorzugte Gerüste für multifunktionelle Michael-Akzeptoren haben ein Molekulargewicht (Mw) von 5.000 oder weniger, stärker bevorzugt von 2.000 oder weniger und am stärksten bevorzugt von 1.000 oder weniger.

Bevorzugte Gerüste des multifunktionellen Michael-Donors haben ein Molekulargewicht (Mw) von 200 oder größer.

Als Polymere können dabei folgende beispielhaft erwähnt werden: Polyalkylenoxid, Polyurethan, Polyethylenvinylacetat, Polyvinylalkohol, Polydien, hydriertes Polydien, Alkyd, Alkydpolyester, (Meth)acrylpolymer, Polyolefin, Polyester, halogeniertes Polyolefin, halogenierter Polyester sowie Copolymere oder Gemische davon.

In einigen Ausführungsformen der Erfindung wird/werden eine oder mehrere Polyolverbindungen, d.h. einer

oder mehrere mehrwertige(r) Alkohol(e) als mindestens ein Gerüst verwendet. Einige mehrwertige Alkohole, die als Gerüste entweder für den multifunktionellen Michael-Akzeptor oder den multifunktionellen Michael-Donor geeignet sind, umfassen zum Beispiel Alkandiole, Alkylenglykole, wie Ethylenglykol, Propylenglykol, Glycerole, Zucker, Pentaerythritole, mehrwertige Derivate davon oder Gemische davon. Einige Beispiele für mehrwertige Alkohole, die als Gerüste geeignet sind, sind Neopentylglykol, Trimethylolpropan, Ethylenglykol und Polyethylenglykol, Propylenglykol und Polypropylenglykol, Butandiol, Pentandiol, Hexandiol, Tricyclodecandimethylol, 2,2,4-Trimethyl-1,3-pentandiol, Bisphenol A, Cyclohexandimethanol, alkoxylierte und/oder propoxylierte Derivate von Neopentylglykol und Tertraethylenglykolcyclohexandimethanol, Hexandiol, Rizinusöl und Trimethylolpropan.

In einer bevorzugten Ausführungsform ist die Struktur (III) über $R_4$ durch eine Esterbindung an eine Polyolverbindung gebunden, wobei die Polyolverbindung wie oben definiert ist.

Einige geeignete multifunktionelle Michael-Akzeptoren in der vorliegenden Erfindung umfassen zum Beispiel Moleküle, in denen einige oder alle der Strukturen (II) Reste von (Meth)acrylsäure, Fumarsäure oder Maleinsäure, substituierte Versionen oder Kombinationen davon sind, die über eine Esterbindung an das multifunktionelle Michael-Akzeptor-Molekül angebunden sind. Eine Verbindung mit Strukturen (II), die zwei oder mehr Reste von (Meth)acrylsäure umfassen, wird hierin als "polyfunktionelles (Meth)acrylat" bezeichnet. Polyfunktionelle (Meth)acrylate mit mindestens zwei Doppelbindungen, die als der Akzeptor in der Michael-Addition agieren können, sind bevorzugt.

Beispiele geeigneter Di(meth)acrylate umfassen, sind aber nicht darauf beschränkt: Ethylenglykol-di(meth)acrylat, Propylenglykol-di(meth)acrylat, Diethylenglykol-di(meth)acrylat, Dipropylenglykol-di(meth)acrylat, Triethylenglykol-di(meth)acrylat, Tripropylenglykol-di(meth)acrylat, Tertraethylenglykol-di(meth)acrylat, Tetrapropylenglykol-di(meth)acrylat, Polyethylenglykol-di(meth)acrylat, Polypropylenglykol-di(meth)acrylat, einfach oder mehrfach ethoxyliertes Bisphenol A-Di(meth)acrylat, Bisphenol A diglycidylether-di(meth)acrylat, Resorcinoldiglycidylether-di(meth)acrylat, 1,3-Propandiol-di(meth)acrylat, 1,4-Butanediol-di(meth)acrylat, 1,5-Pentandiol-di(meth)acrylat, 1,6-Hexandiol-di(meth)acrylat, Neopentylglykol-di(meth)acrylat, Cyclohexanedimethanol-di(meth)acrylat, einfach oder mehrfach ethoxyliertes Neopentylglykol-di(meth)acrylat, einfach oder mehrfach propoxyliertes Neopentylglykol-di(meth)acrylat, einfach oder mehrfach ethoxyliertes Cyclohexandimethanol-di(meth)acrylat, propoxyliertes Cyclohexandimethanol-di(meth)acrylat, Arylurethan-di(meth)acrylate, aliphatisches Urethan-di(meth)acrylat, Polyester-di(meth)acrylat und Gemische davon.

Beispiele geeigneter Tri(meth)acrylate umfassen, sind aber nicht darauf beschränkt: Trimethylolpropan-tri(meth)acrylat, trifunktionelles (Meth)acrylsäure-s-triazin, Glycerol-tri(meth)acrylat, einfach oder mehrfach ethoxyliertes Trimethylolpropan-tri(meth)acrylat, einfach oder mehrfach propoxyliertes Trimethylolpropan-tri(meth)acrylat, Tris(2-hydroxyethyl)isocyanurat-tri(meth)acrylat, einfach oder mehrfach ethoxyliertes Glycerol-tri(meth)acrylat, einfach oder mehrfach propoxyliertes Glycerol-tri(meth)acrylat, Pentaerythritol-tri(meth)acrylat, Arylurethan-tri(meth)acrylate, aliphatische Urethan-tri(meth)acrylate, Melamin-tri(meth)acrylate, Epoxy-Novolac-tri(meth)acrylate, aliphatisches Epoxy-tri(meth)acrylat, Polyester-tri(meth)acrylat und Gemische davon.

Beispiele geeigneter Tetra(meth)acrylate umfassen, sind aber nicht darauf beschränkt: Di(trimethylolpropan)-tetra(meth)acrylat, Pentaerythritol-tetra(meth)acrylat, einfach oder mehrfach ethoxyliertes Pentaerythritol-tetra(meth)acrylat, einfach oder mehrfach propoxyliertes Pentaerythritol-tetra(meth)acrylat, Dipentaerythritol-tetra(meth)acrylat, einfach oder mehrfach ethoxyliertes Dipentaerythritol-tetra(meth)acrylat, einfach oder mehrfach propoxyliertes Dipentaerythritol-tetra(meth)acrylat, Arylurethan-tetra(meth)acrylate, aliphatische Urethan-tetra(meth)acrylate, Melamin-tetra(meth)acrylate, Epoxy-Novolac-tetra(meth)acrylate, Polyester-tetra(meth)acrylate und Gemische davon.

Es können auch Gemische der mehrfunktionellen (Meth)acrylate untereinander verwendet werden.

Beispiele geeigneter Michael-Donoren umfassen: Acetoacetate von einfach oder mehrfach ethoxylierten und propoxylierten Diolen, Triolen und Polyolen, Ethylenglycoldiacetoacetat, 1,2-Propandioldiacetoacetat, 1,3-Propandioldiacetoacetat, 1,4-Butandioldiacetoacetat, 1,6-Hexandioldiacetoacetat, Neopentylglycoldiacetoacetat, Bisphenol A-diacetoacetat, einfach oder mehrfach ethoxyliertes Bisphenol A-diacetoacetat, Isosorbiddiacetoacetat, Cyclohexandimethanoldiacetoacetat, 1,3-Benzoldimethanoldiacetoacetat (1,3-BDDA), 1,4-Benzoldimethanoldiacetoacetat (1,4-BDDA), Trimethylolpropantriacetoacetat (Lonzamon AATMP), Glycerintriacetoacetat, Polycaprolactontriacetoacetat, Pentaerythritoltetraacetoacetat, Dipentaerythritolhexaacetoacetat, Glucosetriacetoacetat, Glucosetetraacetoacetat, Glucosepentaacetoacetat, Sucroseacetoacetate, Sorbitoltriacetoacetat, Sorbitoltetraacetoacetat, einfach oder mehrfach ethoxyliertes Neopentylglycoldiacetoacetat, propoxylierte Glucoseacetoacetatate, propoxylierte Sorbitolacetoacetate, propoxylierte Sucroseacetoacetate, Polyesteracetoacetatate, worin der Polyester von mindestens einer Disäure und minestens einem Diol abgeleitet ist, 1,2-Ethylenbisacetoacetamid, Polyesteramidacetoacetate, worin das Polyesteramid von mindestens einer Disäure und mindestens einem Diamin abgeleitet ist, Acetoacetat-funktionalisiertes Rizinusöl, Polyester-Polymer, (Meth)acrylatpolymer.

Der Michael-Donor kann alleine oder als Gemisch von zwei oder mehreren, unterschiedlichen Verbindungen eingesetzt werden.

Je nach Funktionalität des Michael-Akzeptors und/oder des Michael-Donors können der Vernetzungsgrad des Bindemittels und somit sowohl die Festigkeit der entstehenden Beschichtung als auch deren elastische Eigenschaften

eingestellt werden. Gleichzeitig hat dieses einen direkten Einfluss auf die erzielbare Expansion der entstehenden Aschekruste im Brandfall.

In der Zusammensetzung der vorliegenden Erfindung kann der relative Anteil an multifunktionellen Michael-Akzeptoren zu multifunktionellen Michael-Donoren durch das reaktive Äquivalentverhältnis, welches das Verhältnis der Anzahl aller funktionellen Michael-Akzeptor-Gruppen mit den Strukturen (I), (II) bzw. (III) in der Zusammensetzung zu der Anzahl an Michael-aktiven Wasserstoffatomen in der Zusammensetzung ist, charakterisiert werden. In einigen Ausführungsformen ist das reaktive Äquivalentverhältnis 0,1 bis 10:1; bevorzugt 0,2 bis 5:1; stärker bevorzugt 0,3 bis 3:1; und am stärksten bevorzugt 0,5 bis 2:1.

Durch die Verwendung einer Verbindung, die eine X-H-Gruppe enthält, bevorzugt solche in denen X für N, P oder C als Teil einer sauren Methylgruppe steht, als Bestandteil C wird es möglich, ein einstellbares Reaktivitätsprofil bereitzustellen, das eine anfängliche Induktionsphase mit verringerter Reaktionsrate direkt nach dem Mischen und Aktivieren der Zusammensetzung aufweist, gefolgt von einem Anstieg der Reaktivität nachdem die Bestandteile der Zusammensetzung bereits länger vermischt sind. Diese Induktionszeit kann eingestellt werden, um eine verlängerte "Offenzeit" bereitzustellen, in der die Zusammensetzung hinreichend flüssig bleibt, um verarbeitet werden zu können. Ferner ermöglicht eine verlängerte Offenzeit, dass gegebenenfalls in der Zusammensetzung enthaltene Lösungsmittel oder in der Beschichtung vorhandene Luftblasen entweichen können. Die Induktionsphase erlaubt es dem System über einen längeren Zeitraum zu Fließen und sich zu Nivellieren. Dadurch können Oberflächendefekte minimiert werden, die häufig bei einer (zu) schnellen Aushärtung der Zusammensetzung auftreten.

Über die Einstellung des Zeitraums, über den gegebenenfalls in der Zusammensetzung vorhandene Lösungsmittel verdunsten können, lässt sich die Härte der ausgehärteten Zusammensetzungen beeinflussen. Nach der Induktionsphase verhält sich die Zusammensetzung wie eine entsprechende Zusammensetzung ohne den Bestandteil C und härtet entsprechend aus.

Die Bestandteile der Zusammensetzung bilden ein Säure-Base-Gleichgewichtssystem. Das Reaktivitätsprofil der Zusammensetzung resultiert aus der Wahl der entsprechenden pKa-Werte der sauren Bestandteile B und C in der Zusammensetzung, die zu dem Säure-Base-Gleichgewicht beitragen, und der Reaktivität der deprotonierten Form der Bestandteile gegenüber dem Bestandteil A.

Im Folgenden sind pKa-Werte ausgewählter Bestandteile B oder C aufgelistet:

| | |
|---|---|
| Benzotriazol | 8,2 |
| Acetylaceton | 9,0 |
| Ethosuximid | 9,3 |
| 1,2,3-Triazol | 9,4 |
| Succinimid | 9,5 |
| 4-Nitro-2-methylimidazol | 9,6 |
| Uracil | 9,9 |
| Phenol | 10,0 |
| Benzolsulfonamid | 10,1 |
| 5, 5-Dimethylhydantoin | 10,2 |
| 1,2,4-Triazol | 10,2 |
| Nitromethan | 10,2 |
| Isatin | 10,3 |
| Ethylacetoacetat | 10,7 |
| Diethylmalonat | 13,0. |

Die X-H-Gruppe hat eine höhere Acidität als die saure C-H-Gruppe des Bestandteils B. Bevorzugt hat der Bestandteil C einen pKa (bestimmt in wässrigem Medium), der zumindest eine ganzzahlige Einheit, bevorzugt zwei ganzzahlige Einheiten unter dem pKa des Bestandteils B liegt. Insbesondere ist der pKa des Bestandteils C kleiner als 13, bevorzugt kleiner als 12, stärker bevorzugt kleiner als 11 und noch stärker bevorzugt kleiner als 10. Bei einer höheren Acidität treten Probleme mit dem Katalysator auf. Daher ist der pKa des Bestandteils bevorzugt größer als 7, stärker bevorzugt größer als 8. Die Unterschiede in den pKa-Werten der Bestandteile B und C stellen sicher, dass bei der Anwendung der Zusammensetzung der Bestandteil C bevorzugt vor dem Bestandteil D aktiviert, d.h. deprotoniert wird.

Vorzugsweise hat der Bestandteil C in einer Michael-Addition eine Reaktivität gegenüber dem Bestandteil A, die derart ist, dass er in einer Zusammensetzung, in der auch die sauren C-H-Gruppen des Bestandteils B vorhanden sind, schneller reagiert als der Bestandteil B. Die höhere Reaktivität des Bestandteils C führt zu der Induktionszeit.

Der Bestandteil C hat in der Michael-Addition eine Reaktivität verglichen mit den sauren C-H-Gruppen des Bestandteils B, die um einen Faktor von mindestens 3, bevorzugt mindestens 10, stärker bevorzugt mindestens 30

geringer ist, bestimmt unter vergleichbaren Bedingungen, wobei die Bestandteile bei Raumtemperatur mit einem Überschuss an Michael-Akzeptoren in Gegenwart einer Base, die mindestens 1 Mol-% des Michael-Donors deprotonieren kann, umgesetzt wird. Dies ist für die Bereitstellung der Induktionszeit hilfreich. Sind andere Anwendungstemperaturen erforderlich, sollte die relative Reaktivität bei den angepassten Temperaturen bestimmt werden, um geeignete Verbindungen auszuwählen.

In der erfindungsgemäßen Zusammensetzung sind die X-H-Gruppen bevorzugt mit einem Anteil von mindestens 50 Mol-%, bevorzugt mindestens 100 Mol-%, stärker bevorzugt mindestens 150 Mol-% vorhanden, bezogen auf die Menge an Base, die durch den Bestandteil D freigesetzt wird. Ferner sind die X-H-Gruppen in dem Bestandteil C in einer Menge von nicht mehr als 30 Mol.-%, bevorzugt nicht mehr als 20 Mol-%, bezogen auf die sauren C-H-Gruppen des Bestandteils B, vorhanden.

Die geeignete Menge wird hauptsächlich durch den Säure-Base-Charakter des Bestandteils C gegenüber dem Bestandteil B und die Reaktivität des korrespondierenden Anions gegenüber dem Bestandteil A bestimmt. Sie kann also für verschiedene Systeme variieren. Die Offenzeit kann somit bereits bei sehr geringen Mengen an Bestandteil C eingestellt werden. Dies ist vorteilhaft, da die sehr geringen Mengen an Bestandteil C die Eigenschaften der resultierenden ausgehärteten Zusammensetzung, wie etwa die chemischen und mechanischen Eigenschaften eine Beschichtung, kaum beeinflussen. Gewöhnlich sind die X-H-Gruppen in dem Bestandteil C mit einem Anteil vorhanden, der nicht mehr als 30 Mol-%, bevorzugt nicht mehr als 20 Mol-%, bezogen auf die C-H-Gruppen des Bestandteils B, entspricht.

Geeignete Verbindungen als Bestandteil C sind Verbindungen worin X für ein Kohlenstoffatom (C) steht und das Kohlenstoffatom Teil einer sauren Methylgruppe ist, wobei Nitromethan bevorzugt ist. In weiteren geeigneten Verbindungen mit einer X-H-Gruppe steht X für ein Sauerstoffatom (O), wobei eine aromatische Hydroxylgruppe bevorzugt ist.

Bevorzugte Verbindungen sind saure Aza-Verbindungen, in denen X für ein Stickstoffatom (N) steht, wobei die N-H-Gruppe bevorzugt Teil einer Gruppe Ar-NH-(C=O)-, -(C=O)-NH-(C=O)- oder -NH-(O=S=O) oder ein Heterocyclus ist, indem das Stickstoffatom der N-H-Gruppe Bestandteil des Ringsystems ist. Stärker bevorzugt ist die Verbindung ein Imid-Derivat, bevorzugt cyclisches Imid-Derivat, besonders bevorzugt gegebenenfalls substituiertes Succinimid oder Glutarimid. Beispielhaft kann als substituiertes Succinimid Ethosuximid genannt werden.

Andere geeignete Verbindung, in denen X für ein Stickstoffatom steht, sind Hydantoin-Derivate, wie 5,5-Dimethylhydrantoin, Sulfonamide, wie aromatische Sulfonamide, z.B. Benzol- oder Toluolsulfonamid, oder heterocyclische Verbindungen mit einer N-H-Gruppe, bevorzugt ein gegebenenfalls substituiertes Triazol, Pyrazol oder Imidazol, insbesondere 1,2,4-Triazole, Benzotriazol oder 2-Methyl-4-nitroimidazol oder ein Uracil-Derivat.

Der Bestandteil C kann in deprotonierter Form (in einem Säure-Base-Gleichgewicht mit anderen Bestandteilen) vorliegen.

Die Mengenangaben hierin beziehen sich sowohl auf die neutrale als auch auf die deprotonierte Form. Dies bedeutet, dass wenn der Bestandteil C in einer Menge von mehr als 100 % bezogen auf einen basischen Katalysator, vorhanden ist, der Bestandteil C und der Katalysator in einem Gleichgewicht vorliegen können, so dass die deprotonierte Form des Bestandteils C als dominierende Spezies, welche die Aushärtung der Zusammensetzung initiiert, vorhanden ist, anstatt dass Bestandteil D als basische Spezies und Bestandteil C als saure Spezies vorliegt. Bevorzugt ist die X-H-Funktionalität, d.h. die Anzahl der X-H-Gruppen pro Molekül des Bestandteils C niedrig, bevorzugt geringer als 4, stärker bevorzugt geringer als 2, am stärksten bevorzugt ist sie 1.

Der Bestandteil C kann eine oder mehrere unterschiedliche Verbindung mit mindestens einer X-H-Gruppe enthalten.

Die Zusammensetzung kann neben dem Bestandteil C einen weiteren Bestandteil B2 umfassen, der saure Protonen (C-H) in aktivierten Methylen- oder Methin-Gruppen enthält, eine höhere Acidität als der Bestandteil B hat und der mit dem Bestandteil A reagieren kann. Der Bestandteil B2 kann zu dem Effekt der Beeinflussung der Offenzeit beitragen. Hierzu ist sollte der Bestandteil B2 zweckmäßig mit einem Anteil zwischen 10 und 40 Gew.-% enthalten sein, was deutlich mehr ist als für den Bestandteil C. In der Zusammensetzung sind die C-H-Gruppen in dem Bestandteil B2 mit einem Anteil zwischen 1 und 50 Mol-%, bevorzugt zwischen 5 und 40 Mol-% enthalten, bezogen auf den gesamten Anteil an C-H-Gruppen in dem Bestandteil B.

Der Bestandteil B2 hat bevorzugt eine Struktur Y-C(=O)-CHR-C(=O)-Y', worin R für Wasserstoff oder eine Alkyl-, Aralkyl- oder Arylgruppe steht, und Y und Y' gleich oder verschieden sein können und für verschiedene Substituentengruppen stehen, insbesondere Alkyl-, Aralkyl oder Arylgruppen (R*), Alkoxygruppen (-OR*) oder ein polymeres Grundgerüst, oder worin die -C(=O)-Y- und/oder -C(=O)-Y'-Einheit durch CN oder Phenyl ersetzt ist.

Der Bestandteil C und sofern in der Zusammensetzung vorhanden der Bestandteil B2 sind bei dem vorne genannten reaktiven Äquivalentverhältnis, welches das Verhältnis der Anzahl aller funktionellen Michael-Akzeptor-Gruppen in der Zusammensetzung zu der Anzahl an Michael-aktiven Wasserstoffatomen in der Zusammensetzung ist, zu berücksichtigen.

Der Unterschied der Acidität der beiden C-H-sauren Bestandteile B und B2 wird so gewählt, dass der pKa des Bestandteils B2 zwischen 0,5 und 6, bevorzugt zwischen 1 und 5 und stärker bevorzugt zwischen 1,5 und 4 Einheiten

geringer ist als der pKa des Bestandteils B.

Die Reaktion zwischen dem Michael-Akzeptor und dem Michael-Donor findet in Anwesenheit eines Katalysators (Bestandteil D) statt. Als Katalysatoren können die üblicherweise für Michael-Additionsreaktionen verwendeten Basen, ggf. in Kombination mit einem geeigneten Phasentransferkatalysator, Nukleophile oder Phosphine, die dem Fachmann bekannt sind, verwendet werden. Weiterhin können quarternäre Ammoniumcarbonate, -bicarbonate, Phosphoniumcarbonate und -bicarbonate als Katalysatoren eingesetzt werden.

Geeignete Basen sind: tertiäre Amine, wie Triethylamin, Ethyl-*N,N*-diisopropylamin, 1,4-Diazabicyclo[2.2.2]octan (DABCO); "blockierte" Basen, wie Formiatsalze von Amin- oder Amidinbasen; Amidinbasen, wie 1,8-Diazabicyclo[5.4.0]undec-7-en (DBU) und 1,5-Diazabicyclo[4.3.0]non-5-en (DBN); Guanidinbasen, wie Tetramethylguanidin (TMG) und 1,5,7-Triazabicyclo[4.4.0]dec-5-en (TBD); anorganische Basen, wie Kaliumcarbonat, Kaliumbicarbonat, Phosphate und Hydrogenphosphate; quartäre Ammoniumhydroxide, wie Benzyltrimethylammoniumhydroxid und Tetrabutylammoniumhydroxid (TBAH); Protonenschwamm, wie 1,8-Bis(dimethylamino)naphthalin; Pyridinbasen, wie 2,6-Di-*tert*-butylpyridin, 2,6-Lutidin und Dimethylaminopyridin (DMAP); Carbonsäuresalze, wie Natrium-oder Kaliumsalze von Carbonsäuren, z.B. Acetate; Alkoholate, wie Natriummethanolat, Kaliummethanolat, Natriumethanolat, Kaliumethanolat und Kalium-*tert*-butylalkoholat.

Geeignete Phasentransferkatalysatoren sind: quartäre Ammonium- oder Phosphoniumverbindungen, wie Methyltrioctylammoniumchlorid, Benzyltrimethylammoniumchlorid, Hexadecyltributylphosphoniumbromid, Tetra-*n*-butylammoniumchlorid und Tetra-*n*-butylammoniumbromid. Die Katalyse von Michael-Additionsreaktionen durch Phasentransferkatalysatoren ist beispielsweise beschrieben in E. Diez-Barra, A. de la Hoz, S. Merino, A. Rodriguez, P. Sänchez-Verdü, *Tetrahedron* **1998,** 54, 1835.

Geeignete Nukleophile sind: primäre oder sekundäre Alkylamine wie *n*-Pentylamin und Di-n-propylamin.

Geeignete Phosphine sind: tertiäre Phosphine, wie Tri-*n*-propylphosphin, Tri-*n*-butylphosphin, Tri-*n*-octylphosphin, Dimethylphenylphosphin, Methyldiphenylphosphin oder Triphenylphosphin, wie beispielsweise in J. W. Chan, C. E. Hoyle, A. B. Lowe, M. Bowman, Macromolecules 2010, 43, 6381-6388 beschrieben. In dieser Hinsicht wird ferner Bezug genommen auf die WO 2010/030771 A1, deren Inhalt hiermit in diese Anmeldung aufgenommen wird.

Geeignete quarternäre Ammoniumcarbonate oder Phosphoniumcarbonate sind: Tetramethylammoniummethylcarbonat, Tetramethylammoniumethylcarbonat, Tetrabutyl-ammoniummethylcarbonat, Tetrabutylammoniumethylcarbonat, Tetrahexylammoniummethylcarbonat, Tetrahexylammoniumethylcarbonat, Tetraoctylammoniummethylcarbonat, Tetraoctylammoniumethylcarbonat, Tetradecylammoniummethylcarbonat, Tetradecylammoniumethylcarbonat, Hexadecyltrimethylammoniummethylcarbonat, Hexadecyltrimethylammoniumethylcarbonat, Benzyltrimethylammoniummethylcarbonat, Benzyltrimethylammoniumethylcarbonat, Tetrabutylammoniumbicarbonat, Tetrahexylammoniumbicarbonat, Benzyltrimethylammoniumbicarbonat, Tetrabutylphosphoniummethylcarbonat. Derartige Katalysatoren sind beispielsweise beschrieben in M. Fabris, V. Lucchini, M. Noè, A. Perosa, M. Selva, Chem. Eur. J. 2009, 15, 12273 und M. Fabris, M. Noé, A. Perosa, M. Selva, R. Ballini, J. Org. Chem. 2012, 77, 1805. In dieser Hinsicht wird ferner Bezug genommen auf die WO 11/124663 A sowie die WO 11/055463 A, deren Inhalte hiermit in diese Anmeldung aufgenommen werden.

Der Katalysator kann in katalytischen Mengen oder äquimolar oder im Überschuss eingesetzt werden.

Obwohl die Umsetzung des Michael-Akzeptors und des Michael-Donors in Abwesenheit eines Lösungsmittels erfolgen kann, ist es manchmal erforderlich, die Effektivität der Umsetzung oder die Viskosität der Bestandteile, insbesondere des Michael-Akzeptors zu verändern und/oder anzupassen.

Bevorzugt wird ein Lösungsmittel verwendet, welches eine geringe Viskosität aufweist und an der Umsetzung teilnimmt und in das Bindemittel eingebaut wird, ein sogenannter Reaktivverdünner. Geeignete Reaktivverdünner sind selbst Michael-Akzeptoren mit mindestens einer funktionellen Michael-Akzeptor-Gruppe, die jedoch monomer oder oligomer, bevorzugt monomer sind, und können die oben genannten entsprechenden Gerüste aufweisen.

Erfindungsgemäß enthält der Bestandteil E ein dämmschichtbildendes Additiv, wobei das Additiv sowohl einzelne Verbindungen als auch ein Gemisch von mehreren Verbindungen umfassen kann.

Zweckmäßig werden als dämmschichtbildende Additive solche eingesetzt, die unter Hitzeeinwirkung eine sich aufblähende, isolierende Schicht aus schwerentflammbaren Material bilden. Diese Schicht schützt das Substrat vor Überhitzung und verhindert oder verzögert zumindest dadurch die Veränderung der mechanischen und statischen Eigenschaften tragender Bauteile durch Hitzeeinwirkung. Die Bildung einer voluminösen, isolierenden Schicht, nämlich eine Ascheschicht, kann durch die chemische Reaktion eines Gemisches aus entsprechend aufeinander abgestimmter Verbindungen, die bei Hitzeeinwirkung miteinander reagieren, gebildet werden. Solche Systeme sind dem Fachmann unter dem Begriff chemisch intumeszierende Systeme bekannt und können erfindungsgemäß eingesetzt werden. Alternativ kann die voluminöse, isolierende Schicht durch physikalische Intumeszenz gebildet werden. Beide Systeme können jeweils alleine oder zusammen als Kombination erfindungsgemäß eingesetzt werden.

Für die Ausbildung einer intumeszierenden Schicht durch chemische Intumeszenz sind allgemein wenigstens drei Komponenten erforderlich, ein Kohlenstofflieferant, ein Dehydrierungskatalysator und ein Treibmittel, die beispielsweise bei Beschichtungen in einem Bindemittel enthalten sind. Bei Hitzeeinwirkung erweicht das Bindemittel und die

Brandschutzadditive werden freigesetzt, so dass diese im Falle der chemischen Intumeszenz miteinander reagieren oder im Falle der physikalischen Intumeszenz sich aufblähen können. Durch thermische Zersetzung wird aus dem Dehydrierungskatalysator die Säure gebildet, die als Katalysator für die Carbonifizierung des Kohlenstofflieferanten dient. Gleichzeitig zersetzt sich das Treibmittel thermisch unter Bildung inerter Gase, die ein Aufblähen des carbonisierten (verkohlten) Materials und gegebenenfalls des erweichten Bindemittels unter Bildung eines voluminösen, isolierenden Schaums bewirkt.

In einer Ausführungsform der Erfindung, in der die isolierende Schicht durch chemische Intumeszenz gebildet wird, umfasst das dämmschichtbildende Additiv mindestens einen Kohlenstoffgerüstbildner sofern das Bindemittel nicht als solcher verwendet werden kann, mindestens einen Säurebildner, mindestens ein Treibmittel und mindestens einen anorganischen Gerüstbildner. Die Komponenten des Additivs werden insbesondere so ausgewählt, dass sie einen Synergismus entwickeln können, wobei einige der Verbindungen mehrere Funktionen erfüllen können.

Als Kohlenstofflieferant kommen die in intumeszierenden Brandschutzformulierungen üblicherweise verwendeten und dem Fachmann bekannten Verbindungen in Betracht, wie stärkeähnliche Verbindungen, z.B. Stärke und modifizierte Stärke, und/oder mehrwertige Alkohole (Polyole), wie Saccharide, Oligosaccharide und Polysaccharide, und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk. Geeignete Polyole sind Polyole aus der Gruppe Zucker, Pentaerythrit, Dipentaerythrit, Tripentaerythrit, Polyvinylacetat, Polyvinylalkohol, Sorbitol, EO-PO-Polyole. Bevorzugt werden Pentaerythrit, Dipentaerythrit oder Polyvinylacetat eingesetzt.

Es sei erwähnt, dass das Bindemittel im Brandfall selbst auch die Funktion eines Kohlenstofflieferanten haben kann.

Als Dehydrierungskatalysatoren bzw. Säurebildner kommen die in intumeszierenden Brandschutzformulierungen üblicherweise verwendeten und dem Fachmann bekannten Verbindungen in Betracht, wie ein Salz oder ein Ester einer anorganischen, nicht flüchtigen Säure, ausgewählt unter Schwefelsäure, Phosphorsäure oder Borsäure. Im Wesentlichen werden phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-FormaldehydHarz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroanilin-2-sulfonsäure und 4,4-Dinitrosulfanilamid und dergleichen. Als Borsäureverbindung kann Melaminborat beispielhaft erwähnt werden.

Als Treibmittel kommen die üblicherweise in Brandschutzformulierungen verwendeten und dem Fachmann bekannten Verbindungen in Betracht, wie Cyanursäure oder Isocyansäure und deren Derivate, Melamin und deren Derivate. Solche sind: Cyanamid, Dicyanamid, Dicyandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränken, wie Melaminpolyphosphat, das sowohl als Säurebildner als auch als Treibmittel wirkt. Weitere Beispiele sind in der GB 2 007 689 A1, EP 139 401 A1 und US 3 969 291 A1 beschrieben.

In einer Ausführungsform der Erfindung, in der die isolierende Schicht durch physikalische Intumeszenz gebildet wird, umfasst das dämmschichtbildende Additiv mindestens eine thermisch expandierbare Verbindung, wie eine Graphit-Interkalationsverbindung, die auch als Blähgraphit bekannt sind. Diese können ebenfalls ins Bindemittel eingebunden werden.

Als Blähgraphit kommen beispielsweise bekannte Einlagerungsverbindungen von $SO_x$, $NO_x$, Halogen und/oder Säuren in Graphit in Frage. Diese werden auch als Graphitsalze bezeichnet. Bevorzugt sind Blähgraphite, die bei Temperaturen von beispielsweise 120 bis 350°C unter Aufblähen $SO_2$, $SO_3$ NO und/oder $NO_2$ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich. Im Allgemeinen sind die Blähgraphitteilchen in der erfindungsgemäßen Zusammensetzung gleichmäßig verteilt. Die Konzentration an Blähgraphitteilchen kann aber auch punktuell, musterartig, flächig und/oder sandwichartig variiert sein. In dieser Hinsicht wird Bezug genommen auf die EP 1489136 A1, deren Inhalt hiermit in diese Anmeldung aufgenommen wird.

Da die im Brandfall gebildete Aschekruste manchmal zu instabil ist und daher abhängig von deren Dichte und Struktur etwa durch Luftströmungen verblasen werden kann, was sich negativ auf die isolierende Wirkung der Beschichtung auswirkt, kann zu den eben aufgeführten Komponenten mindestens ein Aschekrustenstabilisator gegeben werden.

Als Aschekrustenstabilisatoren bzw. Gerüstbildner kommen die üblicherweise in Brandschutzformulierungen verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von $\leq 50$ $\mu$m, vorzugsweise von 0,5 bis 10 $\mu$m besitzt. Im Fall der Verwendung des teilchenförmigen Metalls in Form von Fasern, Fäden und/oder Whiskers ist eine Dicke von 0,5 bis 10 $\mu$m und eine Länge von 10 bis 50 $\mu$m bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C, Phosphat- oder Sulfatgläsern, Melaminpolyzinksulfaten, Ferrogläsern oder Calziumborosilikaten. Die Zugabe eines solchen Aschekrustenstabilisators trägt zu einer wesentlichen Stabilisierung der Aschekruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Daneben können Aschekrustenstabilisatoren wie Melaminphosphat oder Melaminborat enthalten sein.

Optional können der erfindungsgemäßen Zusammensetzung ein oder mehrere reaktive Flammhemmer zugesetzt werden. Derartige Verbindungen werden in das Bindemittel eingebaut. Ein Beispiel im Sinne der Erfindung sind reaktive Organophosphorverbindungen, wie 9,10-Dihydro-9-oxa-10-phosphaphenanthren-10-oxid (DOPO) und dessen Derivate und Addukte. Solche Verbindungen sind beispielsweise beschrieben in S. V Levchik, E. D Weil, Polym. Int. 2004, 53, 1901-1929 oder E. D. Weil, S. V. Levchik (Hrsg.), Flame Retardants for Plastics and Textiles - Practical Applications, Hanser, 2009, deren Inhalte hiermit in diese Anmeldung augenommen werden.

Das dämmschichtbildende Additiv kann in einer Menge von 30 bis 99 Gew.-% in der Zusammensetzung enthalten sein, wobei die Menge im Wesentlichen von der Applikationsform der Zusammensetzung (Sprühen, Pinseln und dergleichen) abhängt. Um eine möglichst hohe Intumeszenzrate zu bewirken, wird der Anteil des Bestandteils E in der Gesamtformulierung so hoch wie möglich eingestellt. Bevorzugt beträgt der Anteil des Bestandteils E in der Gesamtformulierung 35 bis 85 Gew.-% und besonders bevorzugt 40 bis 85 Gew.-%.

Die Zusammensetzung kann neben den dämmschichtbildenden Additiven gegebenenfalls übliche Hilfsmittel, wie Netzmittel, etwa auf Basis von Polyacrylaten und/oder Polyphosphaten, Entschäumer, wie Silikonentschäumer, Verdicker, wie Alginatverdicker, Farbstoffe, Fungizide, Weichmacher, wie chlorhaltige Wachse, Bindemittel, Flammhemmer oder diverse Füllstoffe, wie Vermiculit, anorganische Fasern, Quarzsand, Mikroglaskugeln, Glimmer, Siliziumdioxid, Mineralwolle, und dergleichen enthalten.

Zusätzliche Additive, wie Verdicker, Rheologieadditive und Füllstoffe können der Zusammensetzung zugegeben werden. Als Rheologieadditive, wie Anti-Absetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet werden verwendet. Daneben können Rheologieadditive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU- und Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. Xanthan Gummi.

Die erfindungsgemäße Zusammensetzung kann als Zwei- oder Mehrkomponenten-System konfektioniert werden.

Wenn der Bestandteil A und der Bestandteil B ohne die Verwendung eines Katalysators bei Raumtemperatur nicht miteinander reagieren, können diese zusammen gelagert werden. Falls eine Reaktion bei Raumtemperatur eintritt, müssen der Bestandteil A und der Bestandteil B reaktionsinhibierend getrennt angeordnet werden. In Anwesenheit eines Katalysators muss dieser getrennt von dem Bestandteil B gelagert werden. Reagiert aufgrund der Natur des Katalysators dieser mit dem Bestandteil A, muss er getrennt von den beiden Bestandteilen gelagert werden. Der Fachmann erkennt bzw. kann einfach ermitteln, welcher Katalysator dazu geeignet ist, zusammen mit dem Bestandteil A eine lagerfähige Komponente zu ergeben. Generell ist wichtig, dass die Bestandteile A und B des Bindemittels und der Katalysator erst unmittelbar vor der Anwendung miteinander gemischt werden und die Härtungsreaktion auslösen.

Der Bestandteil C kann zusammen mit den Bestandteilen A und B oder dem Bestandteil D gelagert werden. Werden die Bestandteile A, B und C miteinander gelagert, ist es bevorzugt, wenn die X-H-Gruppe des Bestandteils C gegenüber dem Bestandteil A in Abwesenheit des Katalysators nicht zu reaktiv ist, um die Lagerstabilität zu erhöhen. Dementsprechend ist es bevorzugt, dass der Bestandteil C in einer Michael-Addition mit dem Bestandteil A ohne Katalysator eine derartige Reaktivität hat, dass dessen Halbwertszeit bei Raumtemperatur mehr als 30 Minuten beträgt, bevorzugt mehr als eine Stunde, stärker bevorzugt mehr als zwei Stunden, noch stärker bevorzugt mehr als vier Stunden,

noch stärker bevorzugt mehr als 24 Stunden und am stärksten bevorzugt mehr als 72 Stunden, gemessen in Butylacrylat.

Der Bestandteil E kann dabei als Gesamtmischung oder in Einzelkomponenten aufgeteilt in einer Komponente oder mehreren Komponenten enthalten sein. Die Aufteilung des Bestandteils E erfolgt abhängig von der Verträglichkeit der in der Zusammensetzung enthaltenen Verbindungen, so dass weder eine Reaktion der in der Zusammensetzung enthaltenen Verbindungen miteinander bzw. eine gegenseitige Störung erfolgen kann. Dies ist von den verwendeten Verbindungen abhängig. Hierdurch wird sichergestellt, dass ein möglichst hoher Anteil an Füllstoffen erzielt werden kann. Dies führt zu einer hohen Intumeszenz, selbst bei geringen Schichtdicken der Zusammensetzung.

Ist mindestens ein Aschekrustenstabilisator in der Zusammensetzung enthalten, so kann dieser in einer Komponente des Zwei- oder Mehrkomponentensystems enthalten sein. Alternativ kann er in geeigneter Weiser auf die mindestens zwei Komponenten aufgeteilt sein.

Die Zusammensetzung wird als Paste mit einem Pinsel, einer Rolle oder durch Sprühen auf das Substrat, insbesondere metallische Substrat aufgebracht. Bevorzugt wird die Zusammensetzung mittels eines Airless-Sprühverfahrens aufgebracht.

Die erfindungsgemäße Zusammensetzung zeichnet sich, verglichen mit den lösemittel- und wasserbasierten Systemen, durch eine relativ schnelle Aushärtung durch eine Additionsreaktion und damit nicht notwendige physikalische Trocknung aus. Dies ist insbesondere dann sehr wichtig, wenn die beschichteten Bauteile schnell belastet bzw. weiterverarbeitet werden müssen, sei es durch Beschichtung mit einer Deckschicht oder ein Bewegen oder Transportieren der Bauteile. Auch ist die Beschichtung somit deutlich weniger anfällig gegenüber äußeren Einflüssen auf der Baustelle, wie z.B. Beaufschlagung mit (Regen)-wasser oder Staub und Schmutz, was in lösemittel- oder wasserbasierten Systemen zu einem Auswaschen von wasserlöslichen Bestandteilen wie dem Ammoniumpolyphosphat führen kann, bzw. bei der Aufnahme von Staub zu einer reduzierten Intumeszenz. Durch die geringe Viskosität der Zusammensetzung trotz des hohen Feststoffanteils, der ohne die Zugabe leicht flüchtiger Lösemittel bis zu 99 Gew.-% in der Zusammensetzung betragen kann, bleibt die Zusammensetzung einfach zu verarbeiten, insbesondere durch gängige Sprühverfahren. Aufgrund des niedrigen Erweichungspunktes des Bindemittels und des hohen Feststoffanteils, ist selbst bei geringer Schichtdicke die Expansionsrate bei Hitzeeinwirkung hoch, wobei der Intumeszenzfaktor im Bereich vom 5- bis 50-fachen der Schichtdicke einer Beschichtung liegt. Die im Brandfall gebildete Aschekruste ist äußerst hart und stabil und liegt im Bereich von 0,50 bis 0,99, gemessen nach der unten angegebenen Methode.

Deshalb ist die erfindungsgemäße Zusammensetzung insbesondere als Brandschutzbeschichtung, insbesondere sprühbare Beschichtung für Bauteile auf metallischer und nicht metallischer Basis, insbesondere für Stahlbauteile und Holzbauteile, geeignet.

Die erfindungsgemäße Zusammensetzung findet vor allem im Baubereich als Beschichtung, insbesondere Brandschutzbeschichtung für Stahlkonstruktionselemente, aber auch für Konstruktionselemente aus anderen Materialien, wie Beton oder Holz, sowie als Brandschutzbeschichtung für einzelne Kabel, Kabelbündel, Kabeltrassen und Kabelkanäle oder andere Leitungen Verwendung.

Ein weiterer Gegenstand der Erfindung ist daher die Verwendung der erfindungsgemäßen Zusammensetzung als Beschichtung, insbesondere als Beschichtung für Konstruktionselemente oder Bauelemente aus Stahl, Beton, Holz und anderen Materialien, wie etwa Kunststoffen, oder als Beschichtung für einzelne Kabel, Kabelbündel, Kabeltrassen und Kabelkanäle oder andere Leitungen, insbesondere als Brandschutzbeschichtung,

Die folgenden Beispiele dienen der weiteren Erläuterung der Erfindung.

## AUSFÜHRUNGSBEISPIELE

Für die Herstellung von erfindungsgemäßen dämmschichtbildenden Zusammensetzungen verwendet man die nachfolgend aufgelisteten Bestandteile. Es werden jeweils die Einzelkomponenten mit Hilfe eines Dissolvers vermengt und homogenisiert. Für die Anwendung werden diese Mischungen dann entweder vor dem Versprühen oder bevorzugt während des Versprühens vermischt und appliziert.

Es wurden jeweils das Aushärteverhalten der Zusammensetzung beobachtet anschließend der Intumeszenzfaktor und die relative Aschekrustenstabilität bestimmt. Hierzu wurde die Massen jeweils in eine runde, 2 mm tiefe Teflon-Form mit 48 mm Durchmesser gegeben.

Die Zeit für die Aushärtung entspricht dabei der Zeit, nach der die Proben durchgehärtet waren und der Teflon-Form entnommen werden konnten.

Zur Bestimmung des Intumeszenzfaktors und der relativen Aschekrustenstabilität wurde ein Muffelofen auf 600°C vorgeheizt. Es wurde eine Mehrfachmessung der Probendicke mit der Schieblehre durchgeführt und der Mittelwert $h_M$ berechnet. Dann wurden die Proben jeweils in eine zylindrische Stahlform eingebracht und für 30 min im Muffelofen erhitzt. Nach Abkühlen auf Raumtemperatur wurde die Schaumhöhe $h_{E1}$ zunächst zerstörungsfrei bestimmt (Mittelwert einer Mehrfachmessung). Der Intumeszenzfaktor / berechnet sich wie folgt:

$$\text{Intumeszenzfaktor I:} \qquad I = h_{E1} : h_M$$

Anschließend ließ man in der zylindrischen Stahlform ein definiertes Gewicht (m = 105 g) aus einer definierten Höhe (h = 100 mm) auf den Schaum fallen und bestimmte die nach dieser teilweise zerstörenden Einwirkung verbleibende Schaumhöhe $h_{E2}$. Die relative Aschekrustenstabilität wurde wie folgt berechnet:

$$\text{relative Aschekrustenstabilität (AKS):} \qquad AKS = h_{E2} : h_{E1}$$

Für die folgenden Beispiele 1 bis 8 und die Vergleichsbeispiele 2 und 3 wurde als Bestandteil E folgende Zusammensetzung verwendet und die Zusammensetzung in der jeweils angegebenen Menge eingesetzt:

*Bestandteil E:*

| Bestandteil | Menge [g] |
|---|---|
| Pentaerythrit | 8,7 |
| Melamin | 8,7 |
| Ammoniumpolyphosphat | 16,6 |
| Titandioxid | 7,9 |

**Beispiel 1**

*Bestandteil A mit D*

| Bestandteil | Menge [g] |
|---|---|
| TMPTA[1] | 11,9 |
| DBU [2] | 0,56 |
| [1]Trimethylolpropantriacrylat<br>[2]1,8-Diazabicyclo[5.4.0]undec-7-en | |

*Bestandteil B*

| Bestandteil | Menge [g] |
|---|---|
| Trimethylolpropantriacetoacetat[3] | 15,5 |
| [3] Lonzamon AATMP | |

*Bestandteil E*

| Bestandteil | Menge [g] |
|---|---|
| wie oben angegeben | 42,0 |

Zur Herstellung eines zweikomponentigen Systems wurde der Bestandteil E auf die Bestandteile A, enthaltend Bestandteil D, und B aufgeteilt.

**Beispiel 2**

*Bestandteil A mit D*

| **Bestandteil** | **Menge [g]** |
|---|---|
| TMPTA | 16,6 |
| DBU | 0,56 |

*Bestandteil B*

| **Bestandteil** | **Menge [g]** |
|---|---|
| Trimethylolpropantriacetoacetat | 10,8 |

*Bestandteil E*

| **Bestandteil** | **Menge [g]** |
|---|---|
| wie oben angegeben | 42,0 |

Zur Herstellung eines zweikomponentigen Systems wurde der Bestandteil E auf die Bestandteile A, enthaltend Bestandteil D, und B aufgeteilt.

**Beispiel 3**

*Bestandteil A mit D*

| **Bestandteil** | **Menge [g]** |
|---|---|
| Pentaerythritoltriacrylat | 12,0 |
| DBU | 0,56 |

*Bestandteil B*

| **Bestandteil** | **Menge [g]** |
|---|---|
| Trimethylolpropantriacetoacetat[3] | 15,5 |
| [3] Lonzamon AATMP | |

*Bestandteil E*

| Bestandteil | Menge [g] |
|---|---|
| wie oben angegeben | 42,0 |

Zur Herstellung eines zweikomponentigen Systems wurde der Bestandteil E auf die Bestandteile A, enthaltend Bestandteil D, und B aufgeteilt.

**Beispiel 4**

*Bestandteil A mit D*

| Bestandteil | Menge [g] |
|---|---|
| Pentaerythritoltriacrylat | 16,7 |
| DBU | 0,56 |

*Bestandteil B*

| Bestandteil | Menge [g] |
|---|---|
| Trimethylolpropantriacetoacetat [3] | 10,8 |
| [3] Lonzamon AATMP | |

*Bestandteil E*

| Bestandteil | Menge [g] |
|---|---|
| wie oben angegeben | 42,0 |

Zur Herstellung eines zweikomponentigen Systems wurde der Bestandteil E auf die Bestandteile A, enthaltend Bestandteil D, und B aufgeteilt.

**Beispiel 5**

*Bestandteil A mit D*

| Bestandteil | Menge [g] |
|---|---|
| Propoxyliertes Glyceroltriacrylat | 14,4 |
| DBU | 0,7 |

*Bestandteil B*

| Bestandteil | Menge [g] |
|---|---|
| Trimethylolpropantriacetoacetat [3] | 13,0 |
| [3] Lonzamon AATMP | |

*Bestandteil E*

| Bestandteil | Menge [g] |
|---|---|
| wie oben angegeben | 42,0 |

Zur Herstellung eines zweikomponentigen Systems wurde der Bestandteil E auf die Bestandteile A, enthaltend Bestandteil D, und B aufgeteilt.

**Beispiel 6**

*Bestandteil A mit D*

| Bestandteil | Menge [g] |
|---|---|
| Propoxyliertes Glyceroltriacrylat | 18,8 |
| DBU | 0,7 |

*Bestandteil B*

| Bestandteil | Menge [g] |
|---|---|
| Trimethylolpropantriacetoacetat [3] | 8,5 |
| [3] Lonzamon AATMP | |

*Bestandteil E*

| Bestandteil | Menge [g] |
|---|---|
| wie oben angegeben | 42,0 |

Zur Herstellung eines zweikomponentigen Systems wurde der Bestandteil E auf die Bestandteile A, enthaltend Bestandteil D, und B aufgeteilt.

**Beispiel 7**

*Bestandteil A*

| Bestandteil | Menge [g] |
|---|---|
| TMPTA [1] | 8,3 |
| [1] Trimethylolpropantriacrylat | |

*Bestandteil B mit D*

| Bestandteil | Menge [g] |
|---|---|
| Trimethylolpropantriacetoacetat [2] | 10,8 |
| $K_2CO_3$ | 1,0 |
| [2] Lonzamon AATMP | |

*Bestandteil E*

| Bestandteil | Menge [g] |
|---|---|
| wie oben angegeben | 30,0 |

Zur Herstellung eines zweikomponentigen Systems wurde der Bestandteil E auf die Bestandteile A und B, enthaltend Bestandteil D, aufgeteilt.

**Beispiel 8**

*Bestandteil A*

| Bestandteil | Menge [g] |
|---|---|
| TMPTA [1] | 10,2 |
| [1] Trimethylolpropantriacrylat | |

*Bestandteil B mit D*

| Bestandteil | Menge [g] |
|---|---|
| Trimethylolpropantriacetoacetat [2] | 8,8 |
| $K_2CO_3$ | 1,0 |
| [2] Lonzamon AATMP | |

*Bestandteil E*

| Bestandteil | Menge [g] |
|---|---|
| wie oben angegeben | 30,0 |

Zur Herstellung eines zweikomponentigen Systems wurde der Bestandteil E auf die Bestandteile A und B, enthaltend Bestandteil D, aufgeteilt.
Der Schrumpf bei allen Zusammensetzungen betrug weniger als 5,0%.

**Vergleichsbeispiel 1**

Als Vergleich diente ein auf wässriger Dispersionstechnologie basiertes kommerzielles Brandschutzprodukt (Hilti CFP S-WB).

**Vergleichsbeispiel 2**

Als weiterer Vergleich diente ein Standard-Epoxy-Amin-System (Jeffamin® T-403, flüssiges, lösemittelfreies und kristallisationsstabiles Epoxidharz, bestehend aus niedermolekularen Epoxidharzen auf Basis Bisphenol A und Bisphenol F (Epilox® AF 18-30, Leuna-Harze GmbH) und 1,6-Hexandioldiglycidylether), das zu 60 % mit einem Intumeszenzgemisch analog den obigen Beispielen gefüllt ist, getestet.

**Vergleichsbeispiel 3**

Als weiterer Vergleich diente ein Standard-Epoxy-Amin-System (Isophorondiamin, Trimethylolpropantriacrylat und flüssiges, lösemittelfreies und kristallisationsstabiles Epoxidharz, bestehend aus niedermolekularen Epoxidharzen auf Basis Bisphenol A und Bisphenol F (Epilox® AF 18-30, Leuna-Harze GmbH)), das zu 60 % mit einem Intumeszenzgemisch analog den obigen Beispielen gefüllt ist, getestet.
Aus Tabelle 1 wird ersichtlich, dass die relative Aschekrustenstabilität bei gleichem Gehalt an dämmschichtbildenden Additiv deutlich höher liegt als die des Vergleichsbeispiels 2 (Epoxid-Amin-System). Auch die Aushärtezeiten konnten gegenüber den Vergleichssystemen deutlich reduziert werden und liegen im Bereich von einer bis drei Stunden.

Tabelle 1: Ergebnisse der Messungen des Intumeszenzfaktors, der Aschenkrustenstabilität und der Aushärtezeit

| **Beispiel** | **Intumeszenzfaktor I (Vielfaches)** | **relative Aschenkrustenstabilität AKS (Vielfaches)** | **Probendicke $h_M$ (mm)** | **Aushärtezeit (h)** |
|---|---|---|---|---|
| 1 | 16 | 0,92 | 3,2 | 1 |
| 2 | 9 | 0,8 | 2,8 | 1 |
| 3 | 26 | 0,97 | 2,8 | 2 |
| 4 | 29 | 0,95 | 2,8 | 2 |
| 5 | 12 | 0,97 | 2,8 | 2,5 |
| 6 | 9 | 0,88 | 2,6 | 2,5 |
| 7 | 25 | 0,97 | 1,9 | 1 |
| 8 | 37 | 0,84 | 1,8 | 0,5 |
| Vergleichsbeispiel 1 | 36 | 0,62 | 1,8 | 10 Tage |
| Vergleichsbeispiel 2 | 22 | 0,04 | 1,6 | 12h |
| Vergleichsbeispiel 3 | 1,7 | 0,60 | 1,2 | 1 Tag |

**Patentansprüche**

1. Dämmschichtbildende Zusammensetzung, umfassend

- einen Bestandteil A, der einen multifunktionellen Michael-Akzeptor enthält, der mindestens zwei elektronenarme Kohlenstoffmehrfachbindungen pro Molekül als funktionelle Michael-Akzeptor-Gruppen aufweist,
- einen Bestandteil B, der einen multifunktionellen Michael-Donor enthält, der mindestens zwei C,H-saure Gruppen pro Molekül als funktionelle Michael-Donor-Gruppen aufweist,
- einen Bestandteil C, der eine Verbindung enthält, die eine X-H-Gruppe aufweist, wobei diese Verbindung mit dem Bestandteil A reagieren kann und wobei X für N, P, O, S oder C steht, mit der Maßgabe, dass wenn X für C steht, C Teil einer sauren Methylgruppe ist,
- einen Bestandteil D, der einen Katalysator für die Michael-Additionsreaktion enthält, und
- einen Bestandteil E, der ein dämmschichtbildendes Additiv enthält.

2. Zusammensetzung nach Anspruch 1, wobei die funktionellen Michael-Akzeptor-Gruppen die Struktur (I) oder (II) aufweisen:

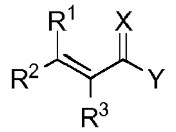
(I)

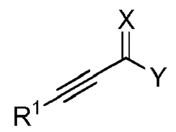
(II)

in denen

$R^1$, $R^2$ und $R^3$ jeweils unabhängig voneinander Wasserstoff, eine lineare, verzweigte oder cyclische, gegebenenfalls substituierte Alkylgruppe, Arylgruppe, Aralkylgruppe oder Alkylarylgruppe darstellen, wobei diese unabhängig voneinander zusätzliche Ethergruppen, Carboxylgruppen, Carbonylgruppen, Thiol-analoge Gruppen, Stickstoff enthaltende Gruppen oder Kombinationen davon enthalten können; X O, S oder $NR^4$ darstellt, worin $R^4$ Wasserstoff oder jede der organischen Gruppen, wie sie für $R^1$, $R^2$ und $R^3$ beschrieben sind, darstellt; Y $OR^5$, $SR^5$ oder $NR^5R^6$ darstellt, worin $R^5$ und $R^6$ Wasserstoff oder jede der organischen Gruppen, wie sie oben für $R^1$, $R^2$ und $R^3$ beschrieben sind, darstellen.

3. Zusammensetzung nach Anspruch 2, wobei jede funktionelle Michael-Akzeptor-Gruppe über einen oder mehrere von $R^1$, $R^2$, $R^3$, $R^4$, $R^5$ oder $R^6$ an eine andere funktionelle Michael-Akzeptor-Gruppe, die gleich oder unterschiedlich sein kann, oder an ein Gerüst direkt angelagert ist.

4. Zusammensetzung nach Anspruch 3, wobei die funktionellen Michael-Akzeptor-Gruppen über $R^4$, $R^5$ oder $R^6$ an eine Polyolverbindung, ein Oligomer oder Polymer gebunden sind.

5. Zusammensetzung nach einem der vorhergehenden Ansprüche, wobei die funktionellen Michael-Donor-Gruppen aus der Gruppe ausgewählt sind, bestehend aus β-Ketoestern, β-Ketoamiden, 1,3-Diketonen, Malonestern und Malonesterderivaten, Cyanoacetatestern, Cyanoacetamiden und α-Nitroalkanen.

6. Zusammensetzung nach Anspruch 4 oder 5, wobei die funktionellen Michael-Akzeptor-Gruppen oder die funktionellen Michael-Donor-Gruppen jeweils unabhängig an eine Polyolverbindung gebunden sind, die aus der Gruppe ausgewählt ist, bestehend aus Pentaerythritol, Neopentylglykol, Glycerol, Trimethylolpropan, Ethylenglykol und Polyethylenglykolen, Propylenglykolen und Polypropylenglykolen, Butandiol, Pentandiol, Hexandiol, Tricyclodecandimethylol, 2,2,4-Trimethyl-1,3-pentandiol, Bisphenol A, Cyclohexandimethanol, alkoxylierten und/oder propoxylierten Derivaten von Neopentylglykol und Tertraethylenglykol.

7. Zusammensetzung nach einem der vorhergehenden Ansprüche, wobei die X-H-Gruppe des Bestandteils C durch einen pKa (bestimmt in wässrigem Medium) gekennzeichnet ist, der mindestens eine ganzzahlige Einheit kleiner ist als der pKa der vorherrschenden C-H-Gruppen in dem Bestandteil B.

8. Zusammensetzung nach einem der vorhergehenden Ansprüche, wobei die X-H-Gruppen in dem Bestandteil C mit einem Anteil von mindestens 50 Mol-% enthalten sind, bezogen auf den Menge an Base, die durch den Bestandteil

D freigesetzt wird.

**9.** Zusammensetzung nach einem der vorhergehenden Ansprüche, wobei die X-H-Gruppen in dem Bestandteil C mit einem Anteil von nicht mehr als 30 Mol-% enthalten sind, bezogen auf die C-H-sauren Gruppen des Bestandteils B.

**10.** Zusammensetzung nach einem der vorhergehenden Ansprüche, wobei neben dem Bestandteil C ein weiterer Bestandteil B2 enthalten ist, der eine Verbindung mit sauren Protonen (C-H) in einer aktivierten Methylen- oder Methin-Gruppe enthält, wobei die Verbindung verglichen mit dem Bestandteil B eine höhere Acidität hat und mit dem Bestandteil A reagieren kann.

**11.** Zusammensetzung nach Anspruch 10, wobei die C-H-Gruppen in dem Bestandteil B2 in einem Anteil zwischen 1 und 50 Mol-% enthalten sind, bezogen auf die gesamten C-H-Gruppen in dem Bestandteil B.

**12.** Zusammensetzung nach einem der vorhergehenden Ansprüche, wobei das reaktive Äquivalentverhältnis im Bereich von 0,1:1 bis 10:1 liegt.

**13.** Zusammensetzung nach einem der vorhergehenden Ansprüche, wobei das dämmschichtbildende Additiv ein Gemisch, das gegebenenfalls mindestens einen Kohlenstofflieferant, mindestens einen Dehydrierungskatalysator und mindestens ein Treibmittel umfasst, und/oder mindestens eine thermisch expandierbare Verbindung umfasst.

**14.** Zusammensetzung nach Anspruch 13, wobei das dämmschichtbildende Additiv ferner einen Aschekrustenstabilisator enthält.

**15.** Zusammensetzung nach einem der vorhergehenden Ansprüche, wobei die Zusammensetzung ferner organische und/oder anorganische Zuschlagstoffe und/oder weitere Additive enthält.

**16.** Zusammensetzung nach einem der vorhergehenden Ansprüche, die als Zwei- oder Mehrkomponenten-System konfektioniert ist.

**17.** Zusammensetzung nach den Ansprüchen 13 und 16, wobei das dämmschichtbildende Additiv als Gesamtmischung oder in Einzelkomponenten aufgeteilt in einer Komponente oder mehreren Komponenten enthalten ist.

**18.** Zusammensetzung nach den Ansprüchen 14 und 16, wobei der Aschekrustenstabilisator in einer Komponente enthalten oder auf die Komponenten aufgeteilt ist.

**19.** Verwendung der Zusammensetzung nach einem der Ansprüche 1 bis 18 als Beschichtung.

**20.** Verwendung nach Anspruch 19 für die Beschichtung von Stahlkonstruktionselementen oder von nicht metallischen Bauteilen.

**21.** Verwendung nach Anspruch 19 für die Beschichtung von einzelnen Kabeln, Kabelbündeln, Kabeltrassen, Kabelkanälen und/oder anderen Leitungen.

**22.** Verwendung nach einem der Ansprüche 19 bis 21 als Brandschutzschicht.

Europäisches Patentamt
European Patent Office
Office européen des brevets

# EUROPÄISCHER RECHERCHENBERICHT

Nummer der Anmeldung
EP 13 19 7465

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | WO 2013/050623 A1 (NUPLEX RESINS BV [NL]) 11. April 2013 (2013-04-11) * Absätze [0012], [0030] - [0041]; Ansprüche 1-16; Beispiele 5-10,14,15 * | 1-20 | INV. C09D5/18 |
| A | EP 0 287 829 A2 (PPG INDUSTRIES INC [US]) 26. Oktober 1988 (1988-10-26) * Absatz [0022]; Ansprüche 1,2; Beispiel 8 * | 1-22 | |
| A | EP 0 477 840 A1 (PPG INDUSTRIES INC [US] PPG IND OHIO INC [US]) 1. April 1992 (1992-04-01) * Absatz [0035]; Anspruch 6 * | 1-22 | |
| A | DE 10 2006 025670 A1 (INTUMEX GMBH [AT]) 14. Dezember 2006 (2006-12-14) * Ansprüche 1,4 * | 1-22 | |
| A,D | EP 1 489 136 A1 (HILTI AG [LI]) 22. Dezember 2004 (2004-12-22) * Anspruch all; Beispiel all * | 1-22 | |
| | | | RECHERCHIERTE SACHGEBIETE (IPC) |
| | | | C09D |

1

Der vorliegende Recherchenbericht wurde für alle Patentansprüche erstellt

| Recherchenort | Abschlußdatum der Recherche | Prüfer |
|---|---|---|
| München | 5. Mai 2014 | Schmitt, Johannes |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 13 19 7465

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-05-2014

| Im Recherchenbericht angeführtes Patentdokument | Datum der Veröffentlichung | Mitglied(er) der Patentfamilie | Datum der Veröffentlichung |
|---|---|---|---|
| WO 2013050623 A1 | 11-04-2013 | AU 2012320414 A1 | 01-05-2014 |
| | | WO 2013050623 A1 | 11-04-2013 |
| EP 0287829 A2 | 26-10-1988 | CA 1287431 C | 06-08-1991 |
| | | EP 0287829 A2 | 26-10-1988 |
| | | JP S63260968 A | 27-10-1988 |
| | | US 4784918 A | 15-11-1988 |
| EP 0477840 A1 | 01-04-1992 | AT 187191 T | 15-12-1999 |
| | | AU 637937 B2 | 10-06-1993 |
| | | AU 8471991 A | 02-04-1992 |
| | | BR 9104176 A | 02-06-1992 |
| | | CA 2052286 A1 | 29-03-1992 |
| | | DE 69131815 D1 | 05-01-2000 |
| | | DE 69131815 T2 | 30-11-2000 |
| | | EP 0477840 A1 | 01-04-1992 |
| | | ES 2142794 T3 | 01-05-2000 |
| | | JP 2507842 B2 | 19-06-1996 |
| | | JP 2653995 B2 | 17-09-1997 |
| | | JP H04272975 A | 29-09-1992 |
| | | JP H08127634 A | 21-05-1996 |
| | | MX 173824 B | 29-03-1994 |
| | | NO 913761 A | 30-03-1992 |
| | | US 5108832 A | 28-04-1992 |
| DE 102006025670 A1 | 14-12-2006 | AT 501930 A1 | 15-12-2006 |
| | | DE 102006025670 A1 | 14-12-2006 |
| | | GB 2428242 A | 24-01-2007 |
| | | NL 1031937 A1 | 04-12-2006 |
| | | NL 1031937 C2 | 09-05-2007 |
| EP 1489136 A1 | 22-12-2004 | AT 496091 T | 15-02-2011 |
| | | AU 2004202450 A1 | 13-01-2005 |
| | | CA 2469534 A1 | 18-12-2004 |
| | | CN 1572824 A | 02-02-2005 |
| | | EP 1489136 A1 | 22-12-2004 |
| | | JP 4450678 B2 | 14-04-2010 |
| | | JP 2005008885 A | 13-01-2005 |
| | | KR 20040110978 A | 31-12-2004 |
| | | US 2004256605 A1 | 23-12-2004 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2010030771 A1
- EP 1462501 A1
- WO 2013050623 A1
- WO 11124663 A
- WO 11055463 A
- GB 2007689 A1
- EP 139401 A1
- US 3969291 A1
- EP 1489136 A1
- US 4442157 A
- US 3562197 A
- GB 755551 A
- EP 138546 A1


### In der Beschreibung aufgeführte Nicht-Patentliteratur


- **J. W. CHAN ; C. E. HOYLE ; A. B. LOWE ; M. BOWMAN.** *Macromolecules,* 2010, vol. 43, 6381-6388
- **M. FABRIS ; V. LUCCHINI ; M. NOÈ ; A. PEROSA ; M. SELVA.** *Chem. Eur. J.,* 2009, vol. 15, 12273
- **M. FABRIS ; M. NOÉ ; A. PEROSA ; M. SELVA ; R. BALLINI.** *J. Org. Chem.,* 2012, vol. 77, 1805
- **S. V LEVCHIK ; E. D WEIL.** *Polym. Int.,* 2004, vol. 53, 1901-1929
- Flame Retardants for Plastics and Textiles - Practical Applications. Hanser, 2009